# EUROPÄISCHE PATENTSCHRIFT

(11) **EP 2 705 952 B1**
(45) Veröffentlichungstag und Bekanntmachung des Hinweises auf die Patenterteilung: **19.06.2019**
(21) Anmeldenummer: 13181939.3
(22) Anmeldetag: 28.08.2013
(51) Int. Cl.: B41F 19/02, B05D 3/06, B41F 23/04, B41F 23/08, G03H 1/02

(54) **VERFAHREN ZUR ERZEUGUNG VON PRÄGESTRUKTUREN IN STRAHLUNGSHÄRTENDEN MATERIALIEN**
METHOD FOR PRODUCING EMBOSSED STRUCTURES IN RADIATION CURABLE MATERIALS
PROCÉDÉ DE GÉNÉRATION DE STRUCTURES EN RELIEF DANS DES MATÉRIAUX DURCISSANT SOUS L'ACTION DE RAYONNEMENTS

(30) Priorität: 05.09.2012 DE 102012017539
(43) Veröffentlichungstag der Anmeldung: 12.03.2014
(73) Patentinhaber: Heidelberger Druckmaschinen AG, 69115 Heidelberg (DE)
(72) Erfinder: Dörsam, Prof. Dr., Edgar, 63179 Obertshausen (DE); Euler, Thorsten, 64291 Darmstadt (DE); Fergen, Dr., Immanuel, 76229 Karlsruhe (DE); Haas, Martin, 64283 Darmstadt (DE); Kurmakaev, Evgeny, 63179 Obertshausen (DE); Schmitt-Lewen, Dr., Martin, 69118 Heidelberg (DE); Sonnenschein, Joachim, 64367 Mühltal (DE)

(56) Entgegenhaltungen:
- EP-A1- 2 307 198
- WO-A1-2008/123050
- WO-A2-2006/032493
- DE-A1-102009 000 573

## Beschreibung

Die Erfindung betrifft ein Verfahren, mit dem Prägestrukturen in strahlungshärtenden Materialien, beispielsweise in UV-Farben oder UV-Lacken vorzugsweise während eines Druckprozesses auf das zu bedruckende Produkt aufgebracht werden. Solche Verfahren und die entsprechenden Vorrichtungen werden benutzt, um beispielsweise Mikroprägestrukturen wie beispielsweise Hologramme, Sicherheitsmerkmale etc. inline, d. h. bei der Herstellung eines Druckprodukts in der Druckmaschine, mit aufzubringen, indem in die nach deren Auftrag auf das Substrat noch nachgiebige UV-härtbaren Farben oder Lacke mechanisch die gewünschte Struktur eingeprägt wird. Dabei wird direkt während des Prägevorgangs UV-Strahlung appliziert, damit die eingeprägten Strukturen nicht mehr verlaufen können. Für das Applizieren der UV-Strahlung direkt beim Prägeprozess sind verschiedene Lösungen bekannt. So ist beispielsweise in der DE 41 32 476 A1 eine Rollendruckmaschine beschrieben, in der die Prägeform auf einem Glaszylinder aufgebracht ist. Diese kontaktiert den frisch lackierten Bedruckstoff, der über den Glaszylinder geführt wird. Im Inneren des Glaszylinders befindet sich die UV-Lichtquelle, die durch die Glaswand des Zylinders hindurch die Kontaktstelle zwischen der Prägeform und dem lackierten Bedruckstoff bestrahlt. Diese Einrichtung ist insbesondere wegen des verwendeten Quarzglaszylinders aufwändig und teuer.

In der DE 10 2007 034 302 A1 ist eine ähnliche Einrichtung beschrieben, bei der ein Band in Form einer Transferfolie mit strukturierten Abziehelementen auf die Oberfläche des über einen Zylinder geführten frisch lackierten oder bedruckten Druckbogens aufgesetzt ist. Hier bestrahlen zwei UV-Lampen die Oberfläche des Bogens durch das strukturierte Band hindurch und härten so die UV-Farbe bzw. den UV-Lack auf dem Bogen direkt an der Kontaktstelle. Sodann werden beim Festwerden der Farbe oder des Lacks auf dem Bogen die Prägemuster oder Hologrammmuster von dem vernetzenden Lack von der Transferfolie abgezogen.

Dieses Verfahren ist aufwändig, weil die strukturierten Elemente (Hologramme etc.) in einem anderen Verfahrensschritt hergestellt und bereits auf der Transferfolie erzeugt oder angepasst werden müssen, bevor sie dann in der Druckmaschine auf die bedruckten Bögen appliziert werden.

In der DE 10 2006 021 069 A1 ist eine ganz ähnliche Einrichtung bekannt, wie die zuvor beschriebene, wobei jedoch dort das Band als Filmförmling ausgebildet ist, da es die in das Band eingeprägte Struktur auf den lackierten Bogen während des Aushärtens überträgt.

EP 2 307 198 A1 beschreibt ein Verfahren zum Übertragen von holographischen oder anderen Mikrostrukturen oder refraktiven Bildern auf die Beschichtung eines Trägermaterials mittels Prägens.

WO 2006/032493 A2 beschreibt eine Vorrichtung und ein Verfahren zur Herstellung von reliefförmigen mikroskopischen Oberflächenstrukturen wie beispielsweise Hologrammen.

WO 2008/123050 A1 beschreibt ein Verfahren zur Herstellung blattförmiger Formteile mit strahlungshärtbarer Schicht, in die ein Muster eingeprägt wird.

DE 10 2009 000573 A1 beschreibt ein Verfahren zur Herstellung von Prägestrukturen auf einem beschichteten Substrat mittels Zylinderkontakts in einer Druckmaschine.

Die aus dem Stand der Technik bekannten Verfahren und Vorrichtungen sind unter Anderem wegen der Verwendung von endlosen oder aufgerollten Bandmaterialien aufwändig und teuer. Es ist die Aufgabe der vorliegenden Erfindung, ein Verfahren zur Erzeugung von Prägestrukturen inline während des Druckens in einer Druckmaschine anzugeben, mit dem die Prägestrukturen ohne großen Aufwand sicher auf die Oberfläche des Bedruckstoffs aufgebracht werden können.

Diese Aufgabe wird mit den im Anspruch 1 angegebenen Maßnahmen gelöst.

Eine dafür geeignete Vorrichtung besitzt die in Anspruch 3 angegebenen Merkmale.

Gemäß der Erfindung werden für das Applizieren der Mikrostrukturen auf einen z. B. Metallzylinder mit reflektierender Oberfläche aufgespannte Prägeformen verwendet. Die können in ähnlicher Weise wie Druckformen oder Gummitücher oder Sleeves auf den entsprechenden Zylinder befestigt werden. Es sind danach keine Glaszylinder erforderlich, um die UV-Strahlung direkt an den Druckspalt zu bringen, über den die Strukturen in die Farbe oder den Lack auf dem bedruckten Substrat eingeprägt werden.

Die Erfindung lässt sich sowohl bei Rollendruckmaschinen als auch bei Bogendruckmaschinen einsetzen. In einer erfindungsgemäßen Ausführungsform ist die Zylinderoberfläche, auf den die Mikroprägeform aufgebracht ist, streuend ausgebildet und das Material der Mikroprägeform UV-durchlässig. Auf diese Weise ist es möglich, die UV-Strahlung in den Druckspalt einzustrahlen, in dem sie dann durch Reflektion oder Streuung an der

Zylinderoberfläche und gegebenenfalls auch mehrfachen Durchgang durch die Mikroprägeform direkt an den Ort des Geschehens gelangt, d. h. in den Druckspalt, dort, wo die Mikroprägeform in Kontakt mit der Farbe bzw. dem Lack auf dem bedruckten Substrat gelangt.

Es kann jedoch auch zweckmäßig sein, die Mikroprägeform selbst reflektierend auszubilden, wobei die Reflektion lediglich bei flachen Auftreffwinkeln gegeben sein muss. In Verbindung mit fokussierenden Elementen vor der UV-Strahlquelle lässt sich auch auf diese Weise erreichen, dass die UV-Strahlung bis ganz in den Druckspalt gelangt und dort die Farbe oder den Lack während des Abformens härtet.

Des Weiteren kann es zweckmäßig sein, noch eine weitere UV-Lichtquelle vorzusehen, die die Oberfläche des Bedruckstoffs schon beim Einlaufen in den Druckspalt sozusagen anhärtet. Auf diese Weise erhält die frische Farbe bzw. der Lack eine Konsistenz, die es erlaubt, Mikrostrukturen einzuprägen, weil er noch nicht ausgehärtet wird, und andererseits wird erheblich die Zeit verlängert, in der sich die eingeprägte Struktur in der Farbe bzw. der Lackschicht hält, bevor sie wieder verläuft. Auf diese Weise kann sehr viel einfacher die Endhärtung nach dem Durchlaufen des Bedruckstoffs durch den Druckspalt durchgeführt werden.

Weitere Vorteile der Erfindung ergeben sich anhand der Beschreibung von Ausführungsbeispielen und anhand der Figuren 1 bis 6 der beigefügten Zeichnungen. Hierbei zeigen:
- Figur 1: eine Schmalbahnrollendruckmaschine in einer vereinfachten schematischen Darstellung vertikal geschnitten,
- Figur 2: eine vereinfachte stark vergrößerte Darstellung des Bereichs um die Zylinder 10 und 11 im Flexodruckwerk 8 der Druckmaschine nach Figur 1,
- Figur 3: eine im Vergleich zu Figur 2 leicht veränderte Ausführungsform der Erfindung,
- Figur 4: ein weiteres im Vergleich zu Figur 2 verändertes Ausführungsbeispiel der Erfindung,
- Figur 5: eine nochmals vergrößerte Darstellung des Bereichs 20 aus Figur 4,
- Figur 6: ein alternatives Ausführungsbeispiel der Erfindung in einer Bogendruckmaschine.

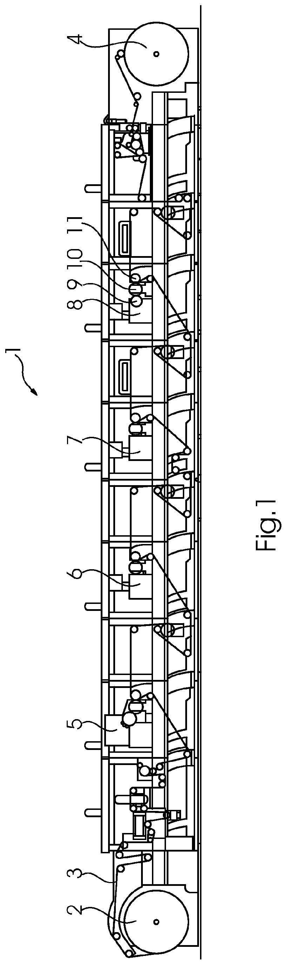

Die in Figur 1 dargestellte Schmalbahnrollendruckmaschine besitzt ein zur Betrachterseite hin offenes Maschinengestell, in dem die mit 3 bezeichnete Materialbahn - Papier oder Folie - über eine Vielzahl von Umlenkrollen geführt ist. Mit 2 ist der Bahnwickel bezeichnet, von dem die Materialbahn 3 abgewickelt wird, und mit 4 der Wickel, auf den die Materialbahn 3 wieder aufgewickelt wird, nachdem die Materialbahn 3 bedruckt, lackiert und in vielfacher Weise veredelt wurde und in noch zu beschreibender Weise mit Mikroprägungen versehen wurde.

Im Maschinengestell sind hintereinander mehrere Druck- und/oder Veredelungswerke 5, 6, 7 und 8 aufgenommen, an denen die Materialbahn 3 vorbeigeführt wird. In Folge des modularen Aufbaus der Maschine können nach ganz unterschiedlichen Druckverfahren arbeitende Druckwerke eingesetzt werden. So ist mit 5 ein Offsetdruckwerk, mit 6 ein Tiefdruckwerk, mit 7 ein Siebdruckwerk und mit 8 ein Flexodruckwerk bezeichnet. Eine Maschine mit diesem Aufbau wird beispielsweise von der Firma Gallus Ferd. Rüesch AG, Harzbüchelstraße 34, 9016 St. Gallen, Schweiz unter Bezeichnung RCS 330-HD angeboten.

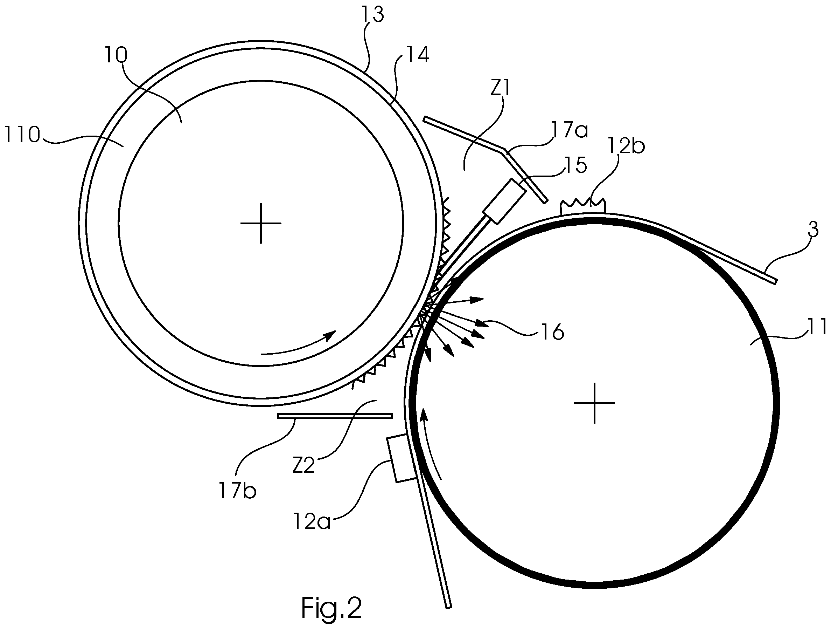

Das Flexodruckwerk 8 ist nun wie in Figur 2 beschrieben in ein Prägewerk zur Einprägung von Mikrostrukturen wie z. B. Hologramme in eine auf die Materialbahn 3 zuvor aufgetragene UV-Lackschicht umgebaut worden. Zu diesem Zweck wurde der Zylinder 10 mit einem Sleeve 110 versehen, auf dessen Außenseite eine UV-Strahlung reflektierende Metallschicht 14 aufgebracht wurde. Bei dem Material der Schicht 14 kann es sich beispielsweise um Aluminium oder Edelstahl oder Chrom handeln. Die reflektierende Oberfläche 14 trägt ihrerseits eine Mikroprägeform 13 aus Silikongummi. Das Material Silikongummi ist im Wellenlängenbereich zwischen 300 und 400 Nanometer, in dem UV-Lacke normalerweise gehärtet werden, transparent. Die Mikroprägeform lässt sich beispielsweise herstellen, indem man sie von einem Nickel-Shim, d. h. einem galvanisch erzeugten dünnen Nickel-Blech mit den Prägestrukturen als Patrize, abformt. Sie besitzt eine Dicke von typisch 2 mm und trägt an ihrer Oberfläche die von dem Shim abgeformten Mikrostrukturen. Aufgrund ihrer weichen, nachgiebigen Konsistenz und der geringen Oberflächenenergie von Silikongummi eignet sie sich besonders gut zum Einprägen von Strukturen in noch feuchte oder nur wenig angetrocknete Farb- oder Lackschichten.

Die über den Umlenkzylinder 11 geführte Materialbahn 3 trägt an ihrer Oberfläche die stark überhöht dargestellten frisch aufgedruckten Bildelemente 12a, die im Zuge der Bahnbewegung durch den Druckspalt zwischen dem Zylinder 10 bzw. dem Sleeve 110 und der Umlenkwalze 11 hindurch laufen.

Anstatt die Farbe oder den Lack, der die Mikrostrukturprägung tragen soll, bereits auf den Bedruckstoff aufzutragen, bevor der den Druckspalt durchläuft, kann es auch zweckmäßig sein, die Mikroprägeform 13 quasi als Lacktuch zu benutzen und darauf über eine Auftragswalze, beispielsweise die Walze 9 der in Figur 1 dargestellten Rollendruckmaschine, die Lack- oder Farbschicht auf das zu bedruckende Substrat 3 aufzutragen, während es den Druckspalt durchläuft, in dem gleichzeitig die Mikroprägung stattfindet.

In dem bezogen auf die Bewegung der Materialbahn 3 stromabwärts gelegenen Zwickel Z1 hinter dem Druckspalt zwischen den beiden Zylindern 10 und 11 ist ein UV-Strahler 15 über die gesamte Breite der Materialbahn 3 eingebaut. Dabei kann es sich beispielsweise um ein Array von UV-emittierenden Dioden oder UV-Laserdioden handeln, die ihre Strahlung auf den Druckspalt gerichtet aussenden. Die emittierte UV-Strahlung durchdringt das Silikongummi der Mikroprägeform 13, wird an der rauen verspiegelten Oberfläche 14 des Sleeves 110 reflektiert und gestreut, und die Streustrahlung dringt wieder durch das Silikongummi der Mikroprägeform 13 hindurch und trifft nun auf die den Druckspalt gerade durchlaufende Farb- bzw. Lackschicht 12a, die somit beim Durchgang durch den Druckspalt gehärtet wird und in deren Oberfläche auf diese Weise die Vertiefungen der Mikroprägeform 13 quasi "eingefroren" sind, wie das schematisch an der mit 12b bezeichneten Stelle ersichtlich ist.

Um zu verhindern, dass UV-Streustrahlung in die Umgebung gelangt, sind die beiden Zwickel Z1 und Z2 stromabwärts und stromaufwärts des Druckspalts durch je eine Streulichtblende 17b und 17a abgeschottet.

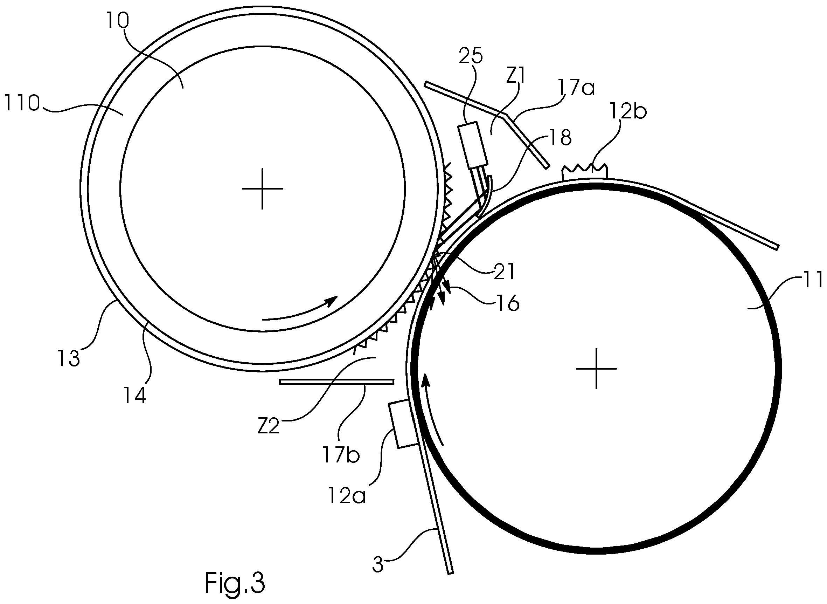

Um die Effektivität des UV-Härteprozesses im Druckspalt zu erhöhen, ist wie im Ausführungsbeispiel nach Figur 3 dargestellt, dem dort mit 25 bezeichneten UV-Strahler ein fokussierender Reflektor 18 vorgeschaltet. Dieser Reflektor besitzt einen hohen Wirkungsgrad, da er die UV-Strahlung unter streifendem Einfall in einem linienförmigen Fokus 21 direkt über der reflektierenden Schicht 14 des Sleeves 110 konzentriert, von wo aus die streuend reflektierte UV-Strahlung 16 durch die Silikonschicht der Mikroprägeform 13 hindurch in den Druckspalt gelangt.

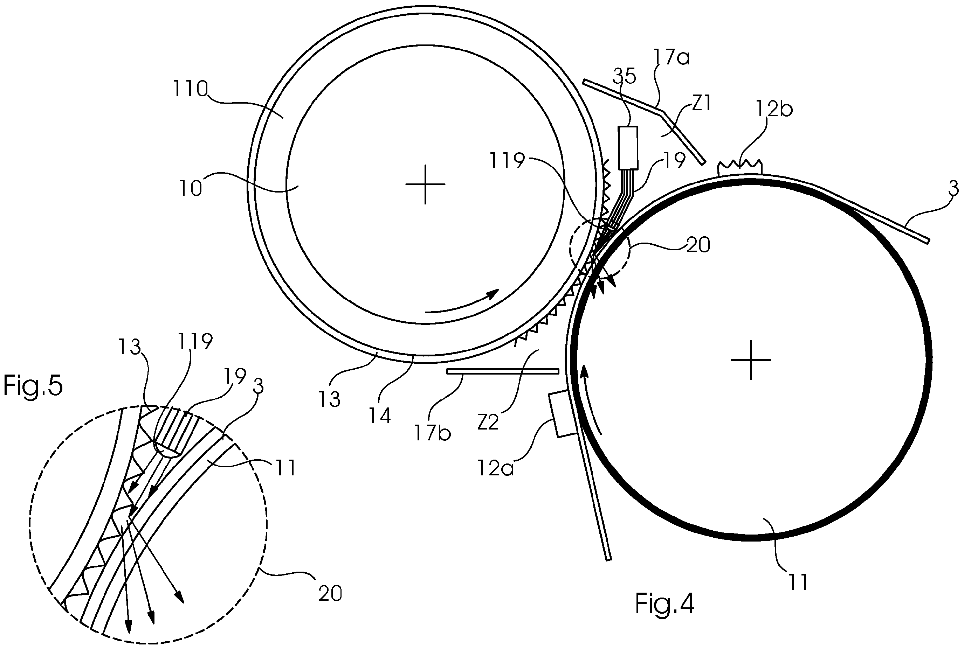

Im alternativen Ausführungsbeispiel nach Figur 4 ist der fokussierende Reflektorspiegel 18 weggelassen. Stattdessen sind auf die Lichtaustrittsfenster des mit 35 bezeichneten UV-Dioden-Arrays Lichtleitfasern 19 aufgesetzt, die das emittierte UV-Licht in dem stromabwärts hinter dem Druckspalt gelegenen Zwickel bis ganz in den Druckspalt hinein führen. Unmittelbar vor dem Druckspalt tritt die UV-Strahlung aus den Faserenden aus, dringt durch die UV-transparente Mikroprägeform 13 hindurch und wird an der rau verspiegelten Oberfläche 14 des Sleeves 110 in den Druckspalt hinein gestreut.

In einem ganz ähnlichen nur ausschnittsweise in der Figur 5 dargestellten Ausführungsbeispiel ist auf eine Verspiegelung des Sleeves 110 verzichtet. Stattdessen besteht die Mikroprägeform 13 aus einem Material wie beispielsweise Silikon mit eingelagerten Metallpartikeln, das die UV-Strahlung für das Härten der feuchten Farb- bzw. Lackschicht 12a insbesondere an der Rückseite reflektiert oder streut. Das gelingt z. B. durch einen zweischichtigen Aufbau der Silikon-Mikroprägeform 13 mit einem hohen Anteil an Metallpartikeln auf der Rückseite und einem metallfreien Aufbau der Silikonschicht auf der Prägeseite. Gegebenenfalls sorgt auch die mikroraue Oberfläche des Zylinders oder Zylinderaufzugs bzw. Sleeves 110, auf der die Mikroprägeform 13 aufliegt, für eine streuende Reflektion der UV-Strahlung an dieser Grenzschicht in Richtung auf das zu härtende Fluid 12a im Druckspalt. Da die Lichtleitfaser 19 die UV-Strahlung sehr nahe an den Druckspalt heranführt und somit ein erheblicher Teil der UV-Strahlung in die UV-transparente Silikon-Mikroprägeform 13 einkoppelt und somit in den Druckspalt gelangt, kann auch auf diese Weise eine effektive Durchhärtung der Farb- bzw. Lackschicht 12a im Druckspalt bzw. direkt dahinter erreicht werden.

Bei den vorstehend beschriebenen Ausführungsbeispielen befindet sich der UV-Strahler jeweils in dem stromabwärts gelegenen Zwickel Z1 hinter dem Druckspalt. Es ist jedoch auch möglich, insbesondere dann, wenn entsprechend mit einem Härteverzug arbeitende Farb- bzw. Lacksysteme verwendet werden, die UV-Strahler in den stromaufwärts gelegenen Zwickel Z2 vor dem Druckspalt anzuordnen (nicht erfindungsgemäß).

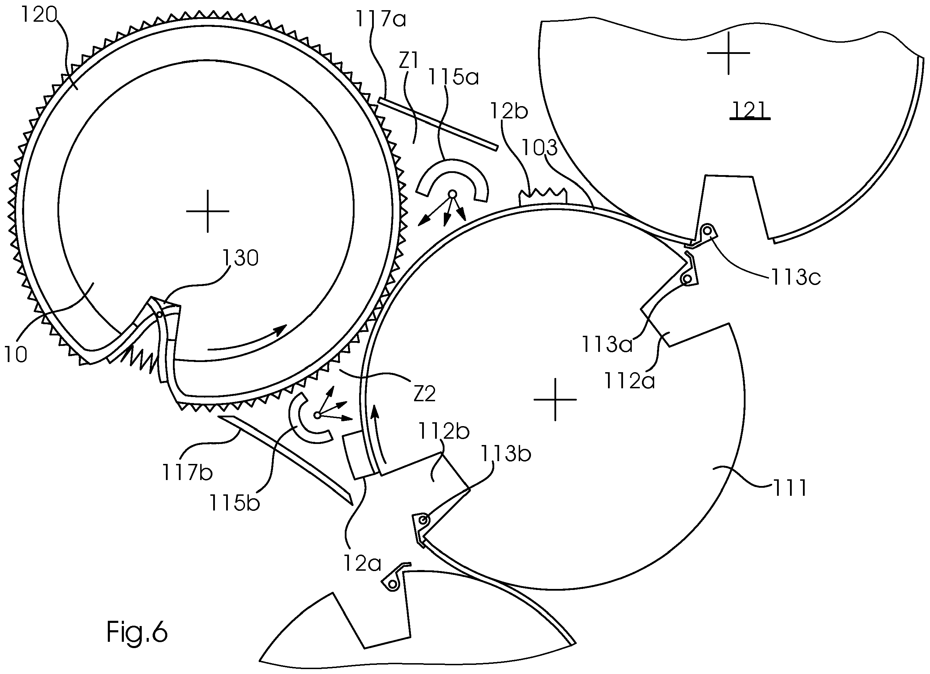

Des Weiteren ist es möglich, mit UV-Strahlern in beiden Zwickeln zu arbeiten, wie das im nachfolgenden Ausführungsbeispiel nach Figur 6 beschrieben ist. In der Figur 6 ist mit 111 ein doppelt großer Gegendruckzylinder einer Bogendruckmaschine bezeichnet. Dieser besitzt zwei Zylinderkanäle 112a und 112b, in denen Greiferleisten 113a und 113b aufgenommen sind, von denen der durchlaufende Bogen 103 gehalten wird, bis er vom nächst folgenden Transportzylinder 121 weiter befördert wird. Auch in der Figur 6 sind die frisch gedruckten Bildelemente wieder mit 12a und nach ihrer Einprägung mit Mikrostrukturelementen als 12b bezeichnet.

Der Prägezylinder 10 besitzt nur den einfachen Durchmesser im Vergleich zum Zylinder 111 und weist ebenfalls einen Kanal 130 auf, in den über nicht näher dargestellte Spanneinrichtungen eine um den Zylinder gewickelte Platte 120 gehalten ist, die auf ihrer Außenseite wieder eine Mikroprägeform 113 trägt.

In dem stromaufwärts gelegenen Zwickel Z2 vor dem Druckspalt erstreckt sich über die gesamte Zylinderlänge hinter einer Blende 117b eine UV-Lampe 115b, deren Wellenlänge und Leistung so auf die UV-Farbe bzw. den UV-Lack 12a abgestimmt ist, dass die Farbe oder der Lack vor dem Durchlaufen durch den Druckspalt nur so weit vorgehärtet ist, dass sie zwar fest aber noch weich und nachgiebig ist. So kann ihr im Druckspalt die Mikrostruktur eingeprägt werden, ohne dass sie jedoch nach Austritt aus dem Druckspalt die eingeprägte Struktur sogleich wieder verliert. In dem stromabwärts gelegenen Zwickel Z1 befindet sich eine zweite UV-Lichtquelle 115a, deren Wellenlänge und Leistung nun so gewählt sind, dass die Farb- oder Lackschicht dort nach Durchtritt durch den Druckspalt endgültig durchgehärtet wird.

Das hier beschriebene Verfahren ist insbesondere für kationische Härtung bzw. für UV-Materialsysteme, also Farben und Lacke geeignet, die über kationische Initiatoren vernetzen.

Erreichen lässt sich die gewünschte "zweistufige" Härtung, indem für die UV-Lampe 115b etwa 20 bis 40 % der für die UV-Lampe 115a Strahlungsleistung aufwendet wird. Geeignete Farben und Lacke für einen solchen zweistufigen Härteprozess werden beispielweise von der Firma Weilburger Graphics GmbH in Gerhardshofen unter den Bezeichnungen Senolith-UV-Glanzlack 360049 (radikalisch) und Senolith-UV-Hochglanzlack 365010 (kationisch) und von der Heidelberger Druckmaschinen AG unter der Bezeichnung Saphira UV-Coating HG FB U8730 (radikalisch) angeboten.

Die Erfindung wurde vorstehend anhand eines inline Drucksystems beschrieben. Das Verfahren kann jedoch auch in allen Anlagen verwendet werden, die zur Beschichtung von Substraten mit flüssigen Medien geeignet sind. Des Weiteren kann das erfindungsgemäße Verfahren in Drucksystemen jeglicher Art, auch Inkjet- oder elektrophotographischen Drucksystemen verwendet werden und bei der Druckweiterverarbeitung, wenn inline in dem Weiterverarbeitungsgerät wie z. B. einer Stanze, einem Hefter oder einer Faltschachtelklebemaschine das dort verarbeitete Produkt nochmals direkt mit einer Mikroprägung versehen werden soll.

Neben dem Aufprägen von Mikrostrukturen auf ebene Substrate wie Papierfolie, Bahn oder Rollenware, kann das Verfahren auch in Abfüllanlagen und in Verpackungsmaschinen implementiert werden.

Auch die Mikroprägeform kann sehr unterschiedlich ausgeführt sein, als Metall oder Metallstruktur, als Kunststofffolie, gegebenenfalls metall- oder kunststoffgewebeverstärkt etc.

Des Weiteren ist es möglich, die Mikroprägeform mit einer antiadhäsiven Schicht zu versehen. Besonders eignet sich für diesen Zweck das unter dem Namen "Sylgard 184" von der Dow Corning GmbH in Wiesbaden, Deutschland vertriebene, im ultravioletten Spektralbereich transparente Silikongummi.

Vorstehend wurde die Erfindung in Verbindung mit UV-härtbaren Farben und Lacken beschrieben. Es ist jedoch auch möglich, im sichtbaren Wellenlängenbereich bzw. im Infrarotbereich härtende Farben und Lacke zu verwenden und entsprechende Strahler für die Härtung der Mikrostrukturen vorzusehen.

Schließlich lässt sich das Verfahren noch dadurch erweitern, dass die Mikroprägeform in einem weiteren Produktionsschritt mit einem Lack zum Schutz der darunter liegenden Mikroprägestruktur versehen wird oder mit einer im Brechungsindex an den geprägten Lack oder die geprägte Farbe angepassten Lackschicht. Diese weitere Schicht kann sowohl vollflächig oder gerastert aufgebracht werden.

Mit dem erfindungsgemäßen Verfahren lassen sich hohe Sicherheitsstandards bei der Produktion von gedruckten Produkten einhalten, da die Herstellung des Sicherheitsmerkmals nun auch direkt am Ende der Produktionskette erfolgen kann und nicht zwingend als Etikett zugeführt werden muss. Zudem ist der Aufwand für die Herstellung und den Wechsel der Prägeform bedeutend günstiger als bei den im Stand der Technik bekannten Verfahren.

### Bezugszeichenliste

- 1: Rollendruckmaschine
- 2, 4: Bahnwickel
- 3: Materialbahn
- 5: Offsetdruckwerk
- 6: Tiefdruckwerk
- 7: Siebdruckwerk
- 8: Flexodruckwerk
- 10, 111: Zylinder
- 11: Umlenkzylinder
- 12a: Bildelemente
- 12b: Bildelemente mit Prägung
- 13, 113: Mikroprägeform
- 14: Oberfläche des Sleeves 110
- 15, 25: UV-Strahler
- 16: UV-Strahlung
- 17a, b: Streulichtblenden
- 18: Reflektor
- 19: Lichtleitfasern
- 20: Bereich aus Figur 4
- 21: linienförmiger Fokus
- 35: UV-Dioden-Array
- 103: Bogen
- 110: Sleeve
- 112 a, b: Zylinderkanäle
- 113a, b: Greiferleisten
- 115a, b: UV-Lichtquelle
- 117a, b: Blende
- 120: Platte
- 121: Transportzylinder
- 130: Kanal
- Z1, Z2: Zwickel

## Patentansprüche

1. Verfahren zur Erzeugung von Prägestrukturen in strahlungshärtenden Materialien, wobei eine Prägeform (13, 113), bei der es sich um eine Mikroprägeform handelt, auf die Oberfläche eines Zylinders (10) oder einer Hülse (110) aufgebracht ist und in einem linienförmigen Druckspalt mit dem strahlungshärtenden Material (12a, b) in Berührung kommt und in dem bezüglich der Substrattransportrichtung stromabwärts gelegenen Zwickel (Z1) hinter dem Druckspalt die zur Härtung dienende Strahlung (16) appliziert wird,
**dadurch gekennzeichnet,**
**dass** die Oberfläche des Zylinders (10) bzw. der Hülse (110) im Wellenlängenbereich der eingesetzten Strahlung (16) für die Härtung spiegelnd und/oder streuend ausgebildet ist und dass das Material der Mikroprägeform (13, 113) im Wellenlängenbereich der für das Härten eingesetzten Strahlung (16) durchlässig ist.

2. Verfahren nach Anspruch 1,
wobei in den beiden Zwickeln (Z1, Z2) vor und nach dem Druckspalt Strahlungsquellen (115a, b) vorgesehen sind, wobei die Strahlungsquelle (117b) im bezogen auf die Substratförderrichtung stromaufwärts gelegenen Zwickel (Z2) vor dem Druckspalt bezüglich der Wellenlänge und/oder der Leistung der Strahlung so bemessen ist, dass das strahlungshärtende Material (12a) nur teilgehärtet wird und verformbar bleibt, während die Leistung und/oder Wellenlänge der Strahlungsquelle (117a) im stromabwärts gelegenen Zwickel (Z1) so bemessen ist, dass das strahlungshärtbare Material (12b) vollständig durchgehärtet wird.

3. Vorrichtung zur Erzeugung von Prägestrukturen mit Mikroprägeformen in strahlungshärtenden Materialien bestehend aus mehreren ersten bogenführenden Zylindern (111) oder bahnumlenkenden Rollen (10) und einem Träger für die Mikroprägeformen, wobei der Träger für die Prägestrukturen (13, 113) ein Zylinder (10, 111) oder eine darauf befestigte Hülse (110) ist und in einem Zwickel (Z1) bezogen auf die Bogentransportrichtung oder Bahntransportrichtung stromabwärts hinter dem von den Zylindern, Hülsen oder Rollen (10, 110/11, 111) gebildetem Druckspalt, in dem die Mikroprägeformen (13, 113) mit den strahlungshärtenden Materialien (12a) in Berührung kommt, Strahlungsquellen (15, 25, 35, 115) zur Härtung der strahlungshärtenden Materialien (12a) vorgesehen sind, welche die Strahlung in dem bezüglich der Substrattransportrichtung stromabwärts gelegenen Zwickel (Z1) applizieren können,
**dadurch gekennzeichnet,**
**dass** die Oberfläche des Zylinders (10) bzw. der Hülse (110) im Wellenlängenbereich der eingesetzten Strahlung (16) für die Härtung spiegelnd und/oder streuend ausgebildet ist und dass das Material der Mikroprägeform im Wellenlängenbereich der für das Härten eingesetzten Strahlung (16) durchlässig ist.

4. Vorrichtung nach Anspruch 3,
wobei die Strahlungsquellen Gasentladungslampen (115a, b), strahlungsemittierende Dioden, Laserstrahlungsquellen oder Arrays (15, 25, 35) aus den beiden Letztgenannten sind.

5. Vorrichtung nach Anspruch 3 oder 4,
wobei die Strahlungsquellen (15, 25, 35) so ausgerichtet sind, dass sie die Strahlung in Richtung auf den Druckspalt emittieren.

6. Vorrichtung nach einem der Ansprüche 3 bis 5,
wobei den Strahlungsquellen (25, 35) fokussierende Elemente (18) oder Lichtleitfasern (19) vorgeordnet sind.

7. Vorrichtung nach einem der Ansprüche 3 bis 6,
wobei zusätzlich zur Strahlungsquelle (115a) noch eine Strahlungsquelle (115b) in dem Zwickel (Z2) stromaufwärts vor dem Druckspalt angeordnet ist.

8. Vorrichtung nach Anspruch 7,
wobei sich die Strahlungsquellen (115a, b) vor und nach dem Druckspalt bezüglich der emittierten Strahlungsleistung und/oder Wellenlänge voneinander unterscheiden derart, dass die Strahlungsquelle (115b) vor dem Druckspalt das strahlungshärtende Material (12a) nur teilhärtet, während die Strahlungsquelle (115a) nach dem Druckspalt das strahlungshärtende Material (12b) mit den eingeprägten Prägestrukturen vollständig durchhärtet.

9. Vorrichtung nach einem der Ansprüche 3 bis 8,
wobei die Mikroprägeform (13, 113) die Abformung eines vorzugsweise holographischen Shims ist.

10. Vorrichtung nach Anspruch 9,
wobei die Mikroprägeform (13, 113) aus einem kompressiblen Material wie beispielsweise Silikongummi besteht, das im ultravioletten Spektralbereich transparent ist und eine Dicke von vorzugsweise 0,2 bis 10 mm besitzt.

11. Anwendung des Verfahrens nach einem der Ansprüche 1 oder 2 in einer der folgenden Maschinen der grafischen Industrie: Bogendruckmaschine, Rollendruckmaschine, Stanzmaschine, Heftmaschine, Faltschachtelklebemaschine, Bindemaschine.

12. Anwendung des Verfahrens nach einem der Ansprüche 1 oder 2 in Anlagen zur Beschichtung von Bahnware mit flüssigen Medien.

13. Verfahren nach einem der Ansprüche 1 oder 2 zur Herstellung von Sicherheitsetiketten, gedruckter Elektronik, optisch auslesbaren Codes oder Hologrammen.

## Claims

1. Method for generating embossed structures in radiation-curing materials, wherein an embossing die (13,113), which is a micro-embossing die, is applied to the surface of a cylinder (10) or sleeve (110) and comes into contact with the radiation-curing material (12a, b) in a line-shaped pressure nip and wherein the radiation (16) for curing is applied in the downstream gusset-shaped region (Z1) located behind the pressure nip as viewed in the direction of substrate transport,
**characterized**
**in that** the surface of the cylinder (10) or sleeve (110) is designed to be reflective and/or scattering in the wavelength range of the radiation (16) used for the curing and in that the material of the micro-embossing die (13, 113) is transparent to radiation in the wavelength range of the radiation (16) used for the curing.

2. Method according to claim 1,
wherein radiation sources (115a, b) are provided in the two gusset-shaped regions (Z1, Z2) upstream and downstream of the pressure nip, wherein in terms of wavelength and/or power of the radiation, the radiation source (117b) in the gusset-shaped region (Z2) located upstream in front of the pressure nip in terms of the conveying direction of the substrate is dimensioned in such a way that the radiation-curing material (12a) is only partly cured and remains deformable, whereas the power and/or wavelength of the radiation source (117a) in the downstream gusset-shaped region (Z1) is dimensioned in such a way that the radiation-curing material (12b) is completely cured through.

3. Device for creating embossed structures with micro-embossing dies in radiation-curing materials, the device consisting of multiple first sheet-guiding cylinders (111) or web-deflecting rollers (10) and a carrier for the micro-embossing dies, wherein the carrier for the embossing structures (13, 113) is a cylinder (10, 111) or a sleeve (110) fixed thereto and wherein radiation sources (15, 25, 35, 115) for curing the radiation-curing materials (12a) and capable of applying the radiation in a gusset-shaped region (Z1) that is located downstream in terms of the direction of substrate transport, are provided behind the pressure nip that is formed by the cylinders, sleeves or rollers (10, 110/11, 111) in the gusset-shaped region (Z1) in which the micro-embossment dies (13, 113) come into contact with the radiation-curing materials (12a),
**characterized**
**in that** the surface of the cylinder (10) or sleeve (110) is designed to be reflective and/or scattering in the wavelength range of the radiation (16) used for the curing and in that the material of the micro-embossing die is transparent to radiation in the wavelength range of the radiation (16) used for the curing.

4. Device according to claim 3,
wherein the radiation sources are gas-discharge lamps, radiation-emitting diodes, laser radiation sources or arrays (15, 25, 35) of the latter two.

5. Device according to claim 3 or 4,
wherein the radiation sources (15, 25, 35) are oriented in such a way that they emit the radiation in the direction of the pressure nip.

6. Device according to any one of claims 3 to 5,
wherein focussing elements (18) or optical fibres (19) are provided upstream of the radiation sources (25, 35).

7. Device according to any one of claims 3 to 6,
wherein a further radiation source (115b) is provided in the region (Z2) upstream in front of the pressure nip in addition to the radiation source (115a).

8. Device according to claim 7,
wherein the radiation sources (115a, b) upstream and downstream of the pressure nip differ from one another in terms of the emitted radiation power and/or the wavelength in such a way that the radiation source (115b) upstream of the pressure nip only partly cures the radiation-curing material (12a) whereas the radiation source (115a) downstream of the pressure nip completely cures the radiation-curing material (12b) with the embossed embossing structures.

9. Device according to any one of claims 3 to 8,
wherein the micro-embossing die (13, 113) is the mould of a shim, preferably a holographic shim.

10. Device according to claim 9,
wherein the micro-embossing die (13, 113) consists of a compressible material such as silicone rubber, which is transparent in the ultraviolet spectral range and has a thickness of preferably 0.2 to 10 mm.

11. Implementation of the method according to claim 1 or 2 in one of the following machines of the graphic industry: sheet-fed printing press, web-fed printing press, die-cutting machine, stitcher, folder-gluer, binder.

12. Implementation of the method according to claim 1 or 2 in equipment for coating web materials with liquid substances.

13. Method according to any one of claims 1 or 2 for creating security tags, printed electronics, optically readable codes or holograms.

## Revendications

1. Procédé pour la création de structures estampées dans des matières durcissant sous rayonnement, pour lequel une forme d'estampage (13, 113), en l'occurrence une forme de micro-estampage, est placée sur la surface d'un cylindre (10) ou d'une douille (110) et entre en contact dans une ligne de contact avec la matière durcissant sous rayonnement (12a, b) et que le rayonnement (16) servant au durcissement est appliqué dans l'interstice cunéiforme (Z1) situé en aval par rapport au sens de transport du substrat, à l'arrière de la ligne de contact,
**caractérisé en ce que**
la surface du cylindre (10) ou de la douille (110) dans la zone de longueur d'ondes du rayonnement appliqué (16) pour le durcissement présente une réflexion ou une dispersion et que la matière de la forme de micro-estampage (13, 113) est perméable dans la zone de la longueur d'ondes du rayonnement (16) utilisé pour le durcissement.

2. Procédé selon la revendication 1,
des sources de rayonnement (115a, b) étant prévues dans les deux interstices cunéiformes (Z1, Z2) en amont et en aval de la ligne de contact, pour lequel la source de rayonnement (117b) dans l'interstice cunéiforme (Z2) situé en amont par rapport au sens de déplacement du substrat est calculée en ce qui concerne la longueur d'ondes et/ou la puissance du rayonnement de sorte que la matière durcissant sous rayonnement (12a) ne soit durcie que partiellement et reste déformable, tandis que la puissance et/ou la longueur d'ondes de la source de rayonnement (117a) dans l'interstice cunéiforme (Z1) situé en aval soit calculée pour que la matière durcissable sous le rayonnement (12b) soit entièrement durcie.

3. Dispositif pour la génération de structures d'estampage avec des formes de micro-estampage dans des matières durcissant sous rayonnement, constitué de plusieurs premiers cylindres (111) de guidage des feuilles ou de rouleaux (10) d'inversion de la bande et d'un support pour les formes de micro-estampage, pour lequel le support des structures d'estampage (13, 113) est un cylindre (10, 111) ou une douille (110) fixée dessus, les formes de micro-estampage (13, 113) entrant en contact, dans un interstice cunéiforme (Z1) situé en aval par rapport au sens de transport des feuilles ou du sens de transport de la bande, derrière la ligne de contact formée par les cylindres, douilles ou rouleaux (10,110/11, 111), avec les matières durcissant sous rayonnement (12a), pour lequel il est prévu des sources de rayonnement (15, 25, 35, 115) pour le durcissement des matières durcissant sous rayonnement (12a) pouvant appliquer le rayonnement dans l'interstice cunéiforme (Z1) situé en aval par rapport au sens de transport du substrat,
**caractérisé en ce que**
la surface du cylindre (10) ou de la douille (110) dans la zone de longueur d'ondes du rayonnement appliqué (16) pour le durcissement présente une réflexion ou une dispersion et que la matière de la forme de micro-estampage est perméable dans la zone de la longueur d'ondes du rayonnement (16) utilisé pour le durcissement.

4. Dispositif selon la revendication 3,
pour lequel les sources de rayonnement sont des lampes à décharge (115a, b), des diodes émettrices de rayonnement, des sources de rayonnement laser ou des agencements (15, 25, 35) des deux dernières sources citées.

5. Dispositif selon la revendication 3 ou 4,
pour lequel les sources de rayonnement (15, 25, 35) sont orientées de sorte à émettre un rayonnement en direction de la ligne de contact.

6. Dispositif selon l'une des revendications 3 à 5,
pour lequel il y a disposition en amont des sources de rayonnement (25, 35) d'éléments de focalisation (18) ou de fibres optiques (19).

7. Dispositif selon l'une des revendications 3 à 6,
pour lequel, il y a disposition, en plus de la source de rayonnement (115a), d'une autre source de rayonnement (115b) dans l'interstice cunéiforme (Z2) en amont de la ligne de contact.

8. Dispositif selon la revendication 7,
pour lequel les sources de rayonnement (115a, b) en amont et en aval de la ligne de contact diffèrent en termes de puissance de rayonnement et/ou de longueur d'ondes émises, de sorte que la source de rayonnement (115b) en amont de la ligne de contact n'assure qu'un durcissement partiel de la matière durcissant sous rayonnement (12a), tandis que la source de rayonnement (115a) en aval de la ligne de contact durcit totalement la matière durcissant sous rayonnement (12b) avec les structures d'estampage réalisées.

9. Dispositif selon l'une des revendications 3 à 8,
pour lequel la forme de micro-estampage (13, 113) est l'empreinte d'un cliché d'estampage, de préférence holographique.

10. Dispositif selon la revendication 9,
pour lequel la forme de micro-estampage (13, 113) se compose d'une matière compressible, telle que du caoutchouc silicone, transparent dans la zone spectrale ultraviolette et présentant une épaisseur préférentielle de 0,2 à 10 mm.

11. Utilisation du procédé selon l'une des revendications 1 ou 2 dans l'une des machines suivantes de l'industrie graphique : machine à imprimer en feuilles, presse à bobines, platine de découpe, agrafeuse, colleuse-plieuse de boîtes pliantes, équipement de reliure.

12. Utilisation du procédé selon l'une des revendications 1 ou 2 pour le revêtement de matière en bande avec des supports liquides.

13. Procédé selon l'une des revendications 1 ou 2 pour la réalisation d'étiquettes de sécurité, d'électronique imprimée, de codes à lecture optique ou d'hologrammes.
